# EUROPÄISCHE PATENTSCHRIFT

(11) **EP 0 464 969 B1**
(45) Veröffentlichungstag und Bekanntmachung des Hinweises auf die Patenterteilung: **16.08.1995**
(21) Anmeldenummer: 91250140.0
(22) Anmeldetag: 30.05.1991
(51) Int. Cl.: G01M 3/20

(54) **Spannungsversorgungsschaltung für ein Helium-Lecksuchgerät**
Tension feeding circuit for a helium leak detector
Circuit d'alimentation en tension d'un détecteur de fuites à hélium

(30) Priorität: 02.06.1990 DE 4017859
(43) Veröffentlichungstag der Anmeldung: 08.01.1992
(73) Patentinhaber: Deutsches Elektronen-Synchrotron DESY, 22607 Hamburg (DE)
(72) Erfinder: Schumann, Gerhard, W-2000 Hamburg 61 (DE)
(74) Vertreter: UEXKÜLL & STOLBERG

(56) Entgegenhaltungen:
- US-A- 3 699 381

## Beschreibung

Die Erfindung betrifft eine Spannungsversorgungsschaltung gemäß Oberbegriff des Patentanspruchs 1.

Eine derartige Schaltung ist aus der Firmendruckschrift der Atlas-Werke, Bremen, "Atlas Gas-Detektor" (1959) bekannt. Zur Aufnahme eines Spektrums ist dort die Ionenbeschleunigungsspannung offenbar einstellbar. Einzelheiten sind aber nicht angegeben.

In Elektronen- oder Protonen-Beschleunigeranlagen wie bei DESY gibt es umfangreiche Hochvakuumsysteme, die immer wieder auf Lecks überprüft werden müssen. Die dazu verwendeten Lecksuchgeräte, bedienen sich zu diesem Zweck in der Regel Helium als Spürgas, das an Leckstellen in das System eintritt und daher nachgewiesen werden kann. Das hierzu verwendete Verfahren der Massenspektroskopie oder Massenspektrometrie beruht darauf, daß unterschiedliche Massen in einem Magnetfeld verschieden abgelenkt werden und daher an unterschiedlichen Stellen auf einen Auffänger auftreffen. Der Auffänger weist nun an einer bestimmten Stelle einen Schlitz auf, der so gewählt ist, daß nur Ionen mit einem bestimmten Verhältnis von Masse zur Energie (m/e) hindurchtreten können. Die hindurchgetretenen Ionen treffen danach auf das Target eines Sekundärelektronenvervielfachers auf und lösen dort einen Elektronenstrom aus, der in einem Vorverstärker verstärkt und dann gemessen und/oder angezeigt wird. Bei dem bekannten Lecksuchgerät liegen die Glühkathode und das Target des Sekundär-Elektronenvervielfachers nebeneinander in einer Ebene, so daß die Bahn der Ionen von ihrem Entstehungsbereich in der Nähe der Glühkathode bis zum Auftreten auf das Target des Sekundär-Elektronenvervielfachers über einen Kreisbogen von 180° verläuft.

Es ist **Aufgabe** der Erfindung, eine Spannungsversorgungsschaltung für ein Lecksuchgerät der eingangs genannten Art zu schaffen, das ohne weiteres vom Helium-Nachweis auf den Wasserstoff-Nachweis umschaltbar ist, ohne daß eine neue Eichung vorgenommen zu werden braucht.

Zur **Lösung** dieser Aufgabe dient eine Spannungsversorgungsschaltung für ein Helium-Lecksuchgerät mit einem 180° Massenspektrometer, enthaltend
- eine erste Schaltung für die Heizung einer Glühkathode einer Elektronenstoßionisations-Vorrichtung und
- eine zweite Schaltung für die Beschleunigung der aus der Glühkathode austretenden Elektronen und für die Beschleunigung der durch Elektronenstoß erzeugten Ionen,
**dadurch gekennzeichnet**,
- daß in der zweiten Schaltung eine gleichgerichtete Spannung über einen Konstantstromregler einem aus einer Reihenschaltung von Zener-Dioden aufgebauten, ersten Spannungsteiler zugeführt ist,
- daß ein Teil der Zener-Dioden an einem Ende des ersten Spannungsteilers von einem Potentiometer überbrückt ist, dessen Mittelabgriff mit einem Ende eines aus Widerständen bestehenden, zweiten Spannungsteilers verbunden ist, dessen anderes Ende an dem anderen Ende des ersten Spannungsteilers liegt,
- daß die Elektronenbeschleunigungsspannung an dem ersten Spannungsteiler abgegriffen ist, und
- daß die Beschleunigungsspannung für Wasserstoff-Ionen mit der Masse 2 durch den Mittelabgriff des Potentiometers einstellbar ist, während ein Abgriff am zweiten Spannungsteiler zum Nachweis der Helium-Ionen dient.

Dadurch wird erreicht, daß ein Testleck nicht erforderlich ist, denn als Eichgase können die Massen 3 und 2 herangezogen werden, die stets im Restgas vorhanden sind. Die Eichung wird durch den fest eingestellten Spannungsteiler auch auf die Masse 4 (Helium) übertragen.

Die Erfindung wird im folgenden anhand von Figuren näher erläutert; es zeigen:
- Figur 1: ein Blockschaltbild für die Helium-Partialdruck-Messung;
- Figur 2: ein Blockschaltbild für die Messung des Totaldrucks des Systemgases und der Emissionsstromregelung;
- Figur 3: ein Blockschaltbild betreffend die Erzeugung verschiedener Spannungen;
- Figur 4: ein Detailschaltbild der Blockschaltbilder von Figur 1 und 2; und
- Figur 5: ein Detailschaltbild des Blockschaltbilds von Figur 3.

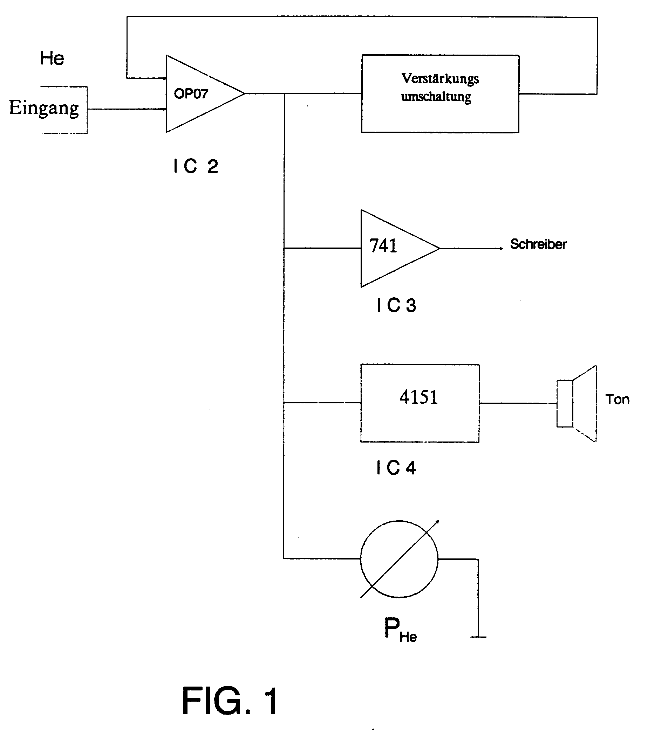

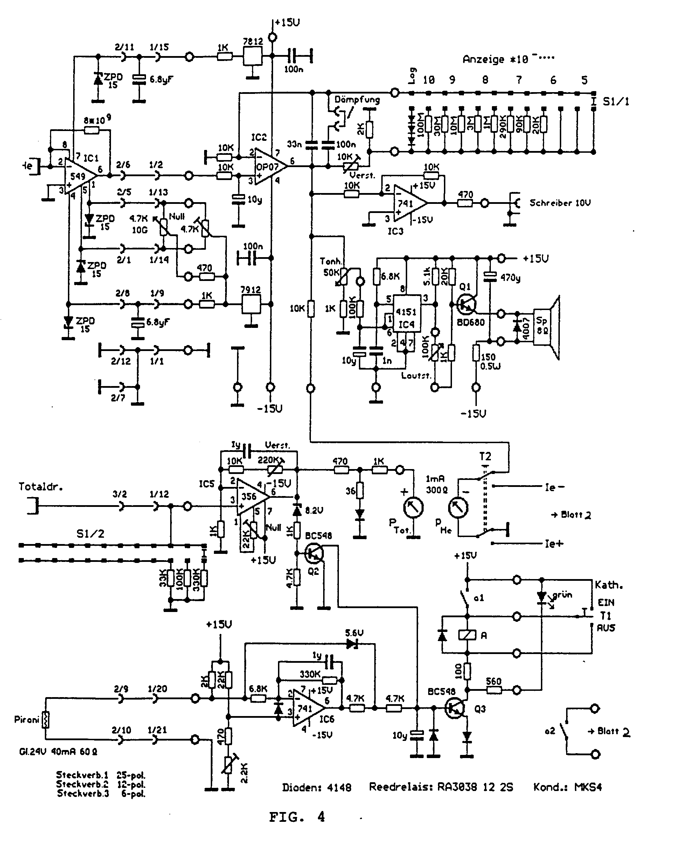

Figur 1 zeigt eine Meßschaltung, die Eingangssignale von dem Auffänger eines 180° Massenspektrometer aufnimmt. Die Massenspektrometer-Signale werden über einen in Figur 4 gezeigten Vorverstärker IC1 an den Eingang eines Operationsverstärkers IC2 übertragen und von diesem verstärkt. Zur Verstärkungsumschaltung dient ein Widerstandsnetzwerk mit Schiebeschaltern (Figur 4), die auf einen Eingang des IC2 zurückkoppeln. Die Ausgangssignale des IC2 werden an ein Meßgerät P_{He} gelegt, das den Partialdruck für Helium anzeigt. Die Ausgangssignale des IC2 werden außerdem über einen Verstärker IC3 an einen Ausgang für einen Schreiber und über eine Logikschaltung IC4 an einen Lautsprecher gelegt. Letzterer kann ein dem Meßwert proportionales akustisches Signal erzeugen.

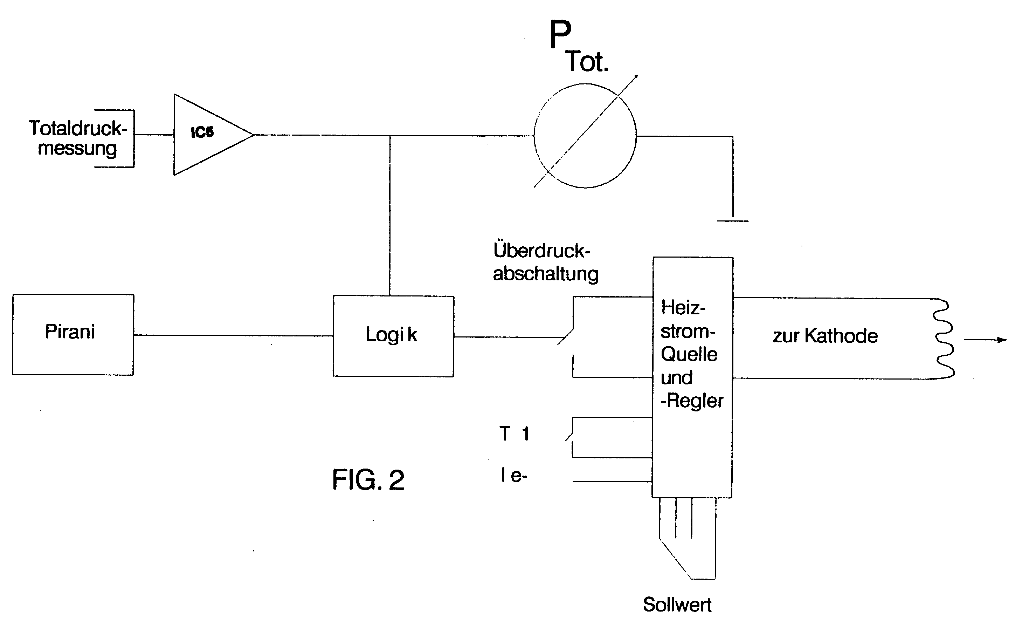

Figur 2 zeigt eine Meßschaltung zur Messung des Totaldrucks im System. Als Auffänger dient hier eine Elektrode, die alle Ionen außer Helium auffängt, deren Ausgangssignale einem Operationsverstärker IC5 (Fig.4) eingegeben werden. Der Operationsverstärker IC5 liefert Ausgangssignale an ein Anzeigeinstrument P_{Tot}, das den Totaldruck anzeigt. Außerdem werden die Ausgangssignale des Operationsverstärkers IC5 über eine Logikschaltung, die in Figur 4 als Kernstück einen Transistor Q2 enthält, an die Basis eines weiteren, gleichartigen Transistors Q3 gelegt, der als Schalter wirkt.

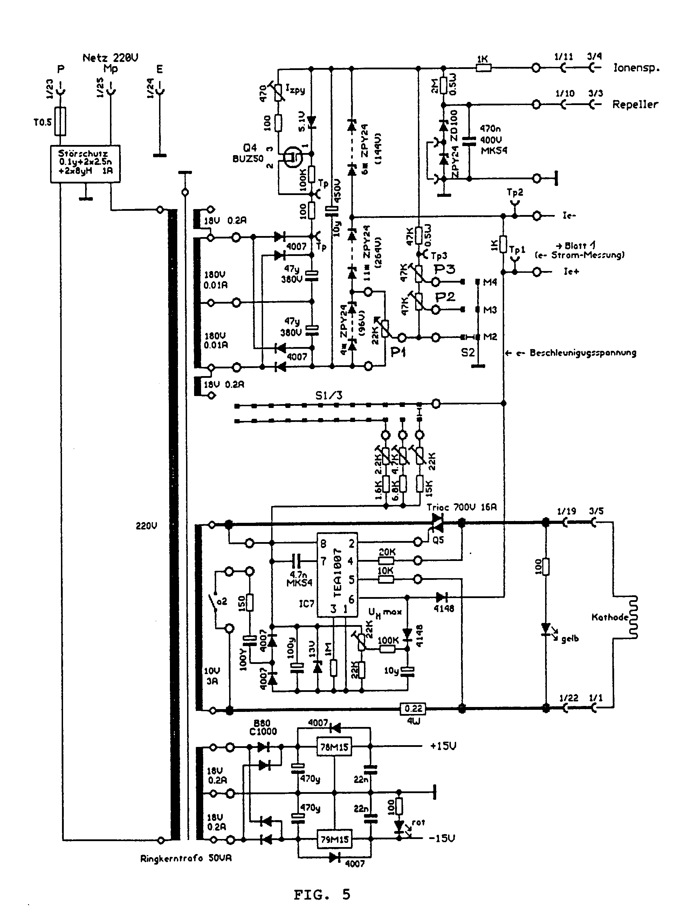

Parallel zu dem Totaldruck-Meßkopf ist ein Vorvakuum-Meßgerät nach Pirani geschaltet, das sein Eingangssignal an einen in der Logikschaltung enthaltenen und in Figur 4 erkennbaren Komparator IC6 legt. Die Funktionsweise dieser Schaltung ist folgendermaßen: Zunächst mißt der Pirani-Sensor bis zu einem Druck von etwa 10⁻³mbar. Während dieser Zeit bleibt der vom Relais A in Figur 4 gesteuerte Schalter a2 (in der Emissionsstrom-Erzeugungsschaltung von Figur 5) offen, d.h. die Glühkathode des Meßkopfs ist ausgeschaltet. Wenn der Pirani-Sensor ein Signal abgibt, das einer Totaldruckmessung von etwa 10⁻³mbar entspricht, was durch Soll- und Ist-Wertvergleich im Komparator IC6 von Figur 4 festgestellt wird, dann leitet der am Ausgang des Komparators IC6 liegende Transistor Q3 und es wird das manuelle Einschalten des Emissionsstroms durch einen Taster T1 freigegeben. Das Relais A zieht also nach Betätigung des Tasters T1 an und schließt den Schalter a2. Dadurch wird der Kathodenstrom für die Glühkathode eingeschaltet. Nun findet die Totaldruckmessung bis zum Bereich von 10⁻⁴ oder 10⁻⁵mbar statt. So lange die Meßsignale zu groß sind, liefert der Operationsverstärker IC6 an seinem Ausgang eine Spannung, die den ersten Transistor Q2 aufsteuert, der dadurch den zweiten Transistor Q3 sperrt. Dadurch fällt das Relais A ab und öffnet den Schalter a2, so daß die Glühkathode des Meßkopfs ausgeschaltet wird. Erst wenn nach Wiedereinschalten von Hand (Taster T1) die Ausgangssignale des Operationsverstärkers IC5 aufgrund der Totaldruckmessung klein genug werden, wird irgendwann der erste Transistor Q2 sperren, worauf der zweite Transistor Q3 durchsteuern kann. Dann zieht das Relais A an und schaltet mit dem Schalter a2 die Glühkathodenspannung ein.

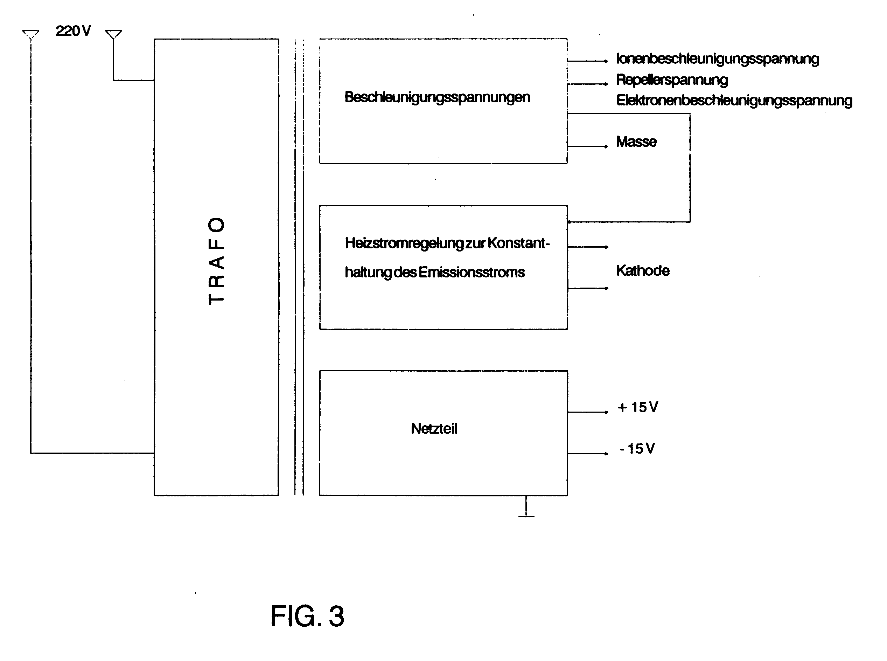

Figur 3 zeigt ein Blockschaltbild der Spannungsversorgungsschaltung. Einzelheiten dieser Schaltungen können der Figur 5 entnommen werden. Daher sind gleiche Teile mit gleichen Bezugszeichen versehen.

Man erkennt einen Transformator, der die Netzspannung von 220 Volt an seiner Sekundärseite an ein Netzteil, an eine Emissionsstromerzeugungsschaltung und an eine Ionen-Beschleunigungsspannungs-Erzeugungsschaltung überträgt.

Das Netzteil ist von üblicher Bauart und erzeugt mit einer Gleichrichterschaltung (Graetz-Gleichrichter) und zwei Spannungsreglern 78M15 und 79M15 konstante Gleichspannungen von +15 V und -15 V. Außerdem zeigt eine zwischen Masse und -15 V gelegte Leuchtdiode das Arbeiten des Netzteils an.

Die Emissionsstrom-Erzeugungsschaltung betreibt die direkt geheizte Kathode mit Wechselstrom, was im Gegensatz zu konventionellen Schaltungen steht. Daher kann als verlustarmer Heizstromregler ein Triac Q5 ohne Gleichrichter verwendet werden. Die Phasenansteuerung des Triacs erfolgt durch eine integrierte Schaltung IC7 des Typs TEA1007, die an sich bekannt ist. Ihre Verwendung in Verbindung mit dem Lecksuchgerät ergibt den Vorteil, daß ein vorzeitiger Heizfadenbruch und Verschleiß durch die integrierten Funktionen "Softstart" und "Überspannungsbegrenzung" vermieden werden. Wie die Ansteuerung des Triacs Q5 zu erfolgen hat, ist dem Fachmann unter Zuhilfenahme der Datenblätter für den IC7 geläufig. Eine Parallelschaltung von festen und veränderbaren Widerständen dient außerdem dazu, den Emissionsstrom der Kathode zu messen und den IC7 derart zu beeinflussen, daß sich der Emissionsstrom der Kathode entsprechend verändert.

Kernstück der Erfindung ist jedoch die Beschleunigungsspannungs-Erzeugungsschaltung. Die Schaltung besitzt zunächst wiederum eine Gleichrichterschaltung (sogenannter Graetz-Gleichrichter), die an die sekundärseitigen Wicklungsenden des Transformators angeschlossen ist. Somit liegen die Wicklungsenden der Sekundärwicklung an den beiden Eingängen des Graetz-Gleichrichters. Ein Ausgang ist der Minus-Pol, während der andere Ausgang über einen Feldeffekttransistor Q4 des Typs BUZ50 als Konstantstromquelle die Betriebsspannung abgibt. Zwischen dem Ausgang des FET Q4 und dem Minus-Pol liegt ein Siebkondensator. Parallel zu dem Siebkondensator liegt eine Kette von Zener-Dioden, die drei Gruppen bilden. Aus bautechnischen Gründen wurden gleiche 24 Volt Zener-Dioden des Typs ZPY24 gewählt. Die erste Gruppe enthält 4 Zener-Dioden, was einem Spannungsabfall von 96 Volt entspricht. Die zweite Gruppe enthält 11 Zener-Dioden entsprechend einem Spannungsabfall von 264 Volt und die dritte Gruppe enthälter 6 Zener-Dioden entsprechend 144 Volt.

Die erste Gruppe von Zener-Dioden (entsprechend 96 Volt) ist durch ein erstes Potentiometer P1 überbrückt, dessen Abgriff über einen Schiebeschalter M2 an Masse liegt. Der Anschlußpunkt des Abgriffs liegt außerdem über ein zweites und drittes Potentiometer P2 und P3 am gleichen Anschlußpunkt wie der Ausgang des FET Q4. Außerdem sind die Abgriffe des zweiten und dritten Potentiometers P2 und P3 ebenfalls durch den Schiebeschalter an Masse legbar. Die erste Stellung des Schiebeschalters entspricht dabei der Masse 4, die zweite Stellung der Masse 3 und die dritte Stellung der Masse 2.

Mit dieser Schaltung wird folgendes erreicht:
Die Eichung des Geräts erfolgt zunächst für die Masse 2 (Wasserstoff), da diese Masse stets im Restgas vorhanden ist. Für diese Masse befindet sich der Schiebeschalter S2 in der untersten Stellung, so daß also der Abgriff des ersten Potentiometers P1 an Masse liegt. Mit dem ersten Potentiometer P1 läßt sich nun das Gerät von außen einjustieren, und zwar indem eine Ionen-Beschleunigungsspannung zwischen 408 Volt und 504 Volt eingestellt wird. Sobald die richtige Einstellung erfolgt ist, kann der Schiebeschalter S2 in eine höhere Position gebracht werden, was einer Umschaltung auf die Massen 3 bzw. 4 entspricht.

Mit den zugehörigen Potentiometern im Inneren des Gerätes werden die Spannungsverhältnisse U_{Masse3}:U_{Masse2} und U_{Masse4}: U_{Masse2} einmal fest eingestellt. Ist eine spätere Nacheichung erforderlich, so erfolgt diese nur für die stets vorhandene Masse 2. Die Spannungen für die Massen 3 und 4 sind dann automatisch richtig, da sie in festem Verhältnis zur Masse 2 stehen.

## Patentansprüche

1. Spannungsversorgungsschaltung für ein Helium-Lecksuchgerät mit einem 180° Massenspektrometer, enthaltend
- eine erste Schaltung für die Heizung einer Glühkathode einer Elektronenstoßionisations-Vorrichtung und
- eine zweite Schaltung für die Beschleunigung der aus der Glühkathode austretenden Elektronen und für die Beschleunigung der durch Elektronenstoß erzeugten Ionen,
**dadurch gekennzeichnet**,
- daß in der zweiten Schaltung eine gleichgerichtete Spannung über einen Konstantstromregler einem aus einer Reihenschaltung von Zener-Dioden aufgebauten, ersten Spannungsteiler zugeführt ist,
- daß ein Teil der Zener-Dioden an einem Ende des ersten Spannungsteilers von einem Potentiometer (P1) überbrückt ist, dessen Mittelabgriff mit einem Ende eines aus Widerständen (P2,P3) bestehenden, zweiten Spannungsteilers verbunden ist, dessen anderes Ende am anderen Ende des ersten Spannungsteilers liegt,
- daß die Elektronenbeschleunigungsspannung an dem ersten Spannungsteiler abgegriffen ist, und
- daß die Beschleunigungsspannung für Wasserstoff-Ionen mit der Masse 2 durch den Mittelabgriff des Potentiometers einstellbar ist, während ein Abgriff am zweiten Spannungsteiler zum Nachweis der Helium-Ionen dient.

2. Spannungsversorgungsschaltung nach Aspruch 1, **dadurch gekennzeichnet**, daß die erste Schaltung eine über ein Triac geregelte Wechselspannung für die direkt geheizte Glühkathode liefert.

## Claims

1. Voltage supplying circuit for a helium leak detector having a semicircular-focusing magnetic spectrometer, the circuit comprising
- a first circuit for the heating of a thermionic cathode of a device for ionization by impact of electrons and
- a second circuit for the acceleration of the electrons emitted from the thermionic cathode and for the acceleration of ions generated by the impact of electrons,
characterized in
- that in the second circuit a rectified voltage is fed via a constant-current regulator to a first potential divider built from a series connection of Zener diodes,
- that part of the Zener diodes is bridged at one end of the first potential divider by a potentiometer (P) whose central tap is connected to one end of a second potential divider which is composed of resistors (P2, P3) and whose other end lies on another end of the first potential divider,
- that the electron-accelerating voltage is tapped on the first potential divider, and
- that the acceleration voltage is adjustable for hydrogen ions having mass 2 via the central tap of the potentiometer, while a tap on the second potential divider serves for the detection of helium ions.

2. Voltage supplying circuit according to claim 1, characterized in that the first circuit supplies for the directly heated thermionic cathode alternating voltage controlled by a triac.

## Revendications

1. Circuit d'alimentation en tension pour un détecteur de fuites fonctionnant à l'hélium ayant un spectre de masse de 180°, comprenant :
- un premier circuit pour le chauffage d'une cathode chaude d'un dispositif d'ionisation par choc électronique et
- un second circuit pour l'accélération des électrons sortant de la cathode chaude et pour l'accélération des ions produits par le choc électronique,
**caractérisé**
- en ce que, dans le second circuit, une tension redressée est acheminée, via un régulateur à courant constant, dans un premier diviseur de tension constitué par un circuit série de diodes Zener,
- en ce qu ' une partie des diodes Zener, à une extrémité du premier diviseur de tension, est shuntée par un potentiomètre (P1) dont la prise médiane est reliée à une extrémité d'un second diviseur de tension comprenant des résistances (P2, P3), second diviseur dont l'autre extrémité se trouve à l'autre extrémité du premier diviseur de tension,
- en ce que la tension d'accélération électronique est prélevée au niveau du premier diviseur de tension, et
- en ce que la tension d'accélération pour les ions hydrogène avec la masse 2 peut être régulée par la prise médiane du potentiomètre, tandis qu'une prise au niveau du second diviseur de tension sert à l'identification des ions hélium.

2. Circuit d'alimentation en tension selon la revendication 1, caractérisé en ce que le premier circuit fournit une tension alternative régulée par un triac, pour la cathode chaude chauffée directement.
